# EUROPÄISCHE PATENTSCHRIFT

(11) **EP 3 307 647 B1**
(45) Veröffentlichungstag und Bekanntmachung des Hinweises auf die Patenterteilung: **07.08.2019**
(21) Anmeldenummer: 16728307.6
(22) Anmeldetag: 09.06.2016
(51) Int. Cl.: B65D 85/804

(54) **PORTIONSKAPSEL MIT EINEM DREILAGIGEN VLIES**
CAPSULE WITH A THREE LAYER FLEECE
CAPSULE AVEC UN TOISON À TROIS COUCHES

(30) Priorität: 10.06.2015 DE 102015210606
(43) Veröffentlichungstag der Anmeldung: 18.04.2018
(73) Patentinhaber: K-fee System GmbH, 51469 Bergisch Gladbach (DE)
(72) Erfinder: KRÜGER, Marc, 51467 Bergisch-Gladbach (DE); HANISCH, Marco, 51491 Overath (DE); EMPL, Günter, 51429 Bergisch Gladbach (DE)
(74) Vertreter: Kutzenberger Wolff & Partner
(86) Internationale Anmeldenummer: PCT/EP2016/063186
(87) Internationale Veröffentlichungsnummer: WO 2016/198534

(56) Entgegenhaltungen:
- WO-A1-2013/189923
- WO-A1-2014/131779
- WO-A2-2008/107645

## Beschreibung

Die vorliegende Erfindung betrifft eine Portionskapsel zur Herstellung eines Getränks, aufweisend einen Kapselkörper mit einem Kapselboden und einer Einfüllseite, wobei zwischen dem Kapselboden und der Einfüllseite ein Hohlraum zur Aufnahme eines pulverförmigen, granulatförmigen oder flüssigen Getränkesubstrats ausgebildet ist und wobei zwischen dem Getränkesubstrat und dem Kapselboden ein Filterelement angeordnet ist. Solche Portionskapseln sind aus dem Stand der Technik allgemein bekannt. Beispielsweise sind in den Druckschiften WO 2013/189923 A1, WO 2008/107645 A2, EP 1792850 B1, EP 1344722 A1 und US 2003/0172813 A1 gattungsgemäße Portionskapseln zur Kaffee- und Espressozubereitung offenbart. Derartige Portionskapseln zur Herstellung eines Getränkes sind bevorzugt kegelstumpfförmig oder zylindrisch geformt und werden beispielsweise aus einer tiefgezogenen Kunststofffolie oder im Kunststoffspritzverfahren hergestellt. Sie haben üblicherweise eine offene Einfüllseite mit einem Kragenrand, auf den eine Deckelfolie aufgesiegelt oder aufgeklebt wird, einen geschlossenen oder offenen Kapselboden, wobei zwischen dem Getränkesubstrat und dem Kapselboden ein sich gegen den Kapselboden abstützendes Partikelsieb angeordnet ist.

Für die Zubereitung eines Getränkes, beispielsweise eines Kaffee- oder Teegetränkes, wird die Portionskapsel in eine Brühkammer eines Zubereitungsgerätes eingebracht. Nach oder während des Schließvorganges der Brühkammer wird die Kapsel bevorzugt auf ihrer geschlossenen Bodenseite mittels eines in der Brühkammer angeordneten Ablaufdornes geöffnet und nach dem Abdichten der Brühkammer wird die mit einer Verschlussfolie verschlossene Einfüllseite der Portionskapsel mittels Einstechmitteln angestochen. Anschließend wird Zubereitungsflüssigkeit, vorzugsweise heißes Wasser, unter Druck in die Portionskapsel gefördert. Die Zubereitungsflüssigkeit durchströmt das Getränkesubstrat und extrahiert und/oder löst die für die Getränkeherstellung benötigten Stoffe aus dem Getränkesubstrat aus. Für die Zubereitung eines Espresso wirkt zum Extrahieren der ätherischen Öle beispielsweise ein Brühwasserdruck von bis zu 20 bar auf das Kaffeepulver. Dieser Druck wirkt ferner auch auf das zwischen dem Kaffeepulver und dem Kapselboden und vor dem eingestochenen Kapselauslauf liegende Filtermedium ein.

Der plötzliche Druckverlust auf der Unterseite des Filtermediums führt zur Schaumbildung im Getränk, beispielsweise in Form einer Crema eines Kaffeegetränks. Für bestimmte Getränke, beispielsweise den klassischen Filterkaffee ohne Crema, welcher insbesondere in den USA & Skandinavien konsumiert wird, ist eine Schaumbildung jedoch unerwünscht.

Es war deshalb die Aufgabe der vorliegenden Erfindung, eine Portionskapsel mit einer Filteranordnung zur Verfügung zu stellen, welche ein im Vergleich zum Stand der Technik verbessertes Filterelement aufweist.

Gelöst wird diese Aufgabe mit einer Portionskapsel zur Herstellung eines Getränks, aufweisend einen Kapselkörper mit einem Kapselboden und einer Einfüllseite, wobei zwischen dem Kapselboden und der Einfüllseite ein Hohlraum zur Aufnahme eines pulverförmigen oder flüssigen Getränkesubstrats ausgebildet ist, wobei zwischen dem Getränkesubstrat und dem Kapselboden ein Filterelement angeordnet ist, wobei wobei das Filterelement mindestens dreischichtig vorgesehen ist und zwischen zwei Schichten eine mit Heißluftspinnen hergestellte Faserschicht vorgesehen ist.

Das Filterelement der erfindungsgemäßen Portionskapsel zeichnet sich durch eine hohe mechanische Stabilität bei vergleichsweise hoher Luftdurchlässigkeit. Gleichzeitig kann eine geringe Porengröße auf der der Getränkesubstanz zugewandten Seite vorhanden sein, so dass hierdurch eine effektive Filterung erzielt wird und keine Feinpartikel aus der Kapsel in das Getränk geschwemmt werden, welche beispielsweise zu einer unerwünschten Verunreinigung des Getränks führen würden.

Die Portionskapsel im Sinne der vorliegenden Erfindung umfasst eine vorzugsweise hermetisch dichte Portionskapsel. Dies bedeutet, dass das in der Portionskapsel befindliche Getränke- oder Lebensmittelpulver, beispielsweise Kaffeepulver, Suppenpulver oder Tee, vor dem Extraktionsvorgang im Wesentlichen aromadicht gegenüber der Umwelt verschlossen ist. Die Portionskapsel kann vorgefertigte Öffnungen aufweisen, die dann aber vor dem Gebrauch der Kapsel vorzugsweise abgedichtet sind, sei es durch eine Folie, die an der Portionskapsel befestigt wird oder durch eine Verpackung, beispielsweise eine Schlauchbeutelverpackung, die die Portionskapsel insgesamt umschließt.

Erfindungsgemäß ist das Filterelement dreilagig vorgesehen, wobei zwischen zwei insbesondere äußeren Schichten eine durch Heißluftspinnen hergestellte Faserschicht vorgesehen ist. Vorzugsweise verbindet diese Schicht die beiden anderen Schichten insbesondere stoffschlüssig.

Weiterhin erfindungsgemäß ist eine Lage des Filterelements, vorzugsweise die mittlere Lage durch Heißluftspinnen (Meltblown-Verfahren) hergestellt. Heißluftspinnen (Meltblown) ist ein Prozess, bei dem nichtgewebte Stoffe direkt aus Granulat hergestellt werden. Ein spezielles Spinnverfahren in Kombination mit Hochgeschwindigkeits-Heißluft wird genutzt, um feinfaserige Stoffe mit unterschiedlichen Strukturen zu produzieren. Beispielsweise wird in einem Extruder aufgeschmolzenes Polymergranulat von einer Pumpe direkt in einen Düsenblock gefördert. Nach dem Austritt durch die Düsenspitze wird das Polymer durch komprimierte Prozess-Heißluft verstreckt. Das entstehende Vlies, insbesondere Mikrofaservlies, kann auf einen luftdurchlässigen Träger, beispielsweise ein Siebband oder direkt auf eine der insbesondere äußeren Schichten abgelegt werden, um das dreilagige Filterelement herzustellen. Dafür ist dann die Meltblown-Anlage um eine Abrollstation für mindestens eine äußere Schicht vor und/oder hinter der Düse erweitert. Vorzugsweise verbindet die noch weiche, klebrige mittlere Schicht die beiden äußeren Schichten bei deren Abkühlung. Ein Kalander kann die äußeren Schichten und die Meltblown-Schicht zusätzlich miteinander verbinden bzw. mechanisch stabilisieren.

Vorzugsweise wird die durch Heißspinnen hergestellte Schicht aus Polypropylen hergestellt und weist eine Massenbelegung zwischen 5 und 50 vorzugsweise 10-20 und besonders bevorzugt 13 - 17 g/m² auf.

### Vorzugsweise sind die beiden insbesondere äußeren Schichten als Vlies vorgesehen

Ein Vlies im Sinne der Erfindung ist eine ungeordnete, nicht gewebte Struktur aus Fasern, insbesondere Kunststofffasern. Ein Vlies im Sinne der Erfindung kann aus Kunststoff und/oder Naturfasern gefertigt sein. Ein Vlies kann beispielsweise aus Papier oder Papierähnliche Stoffen bestehen. Vorzugsweise handelt es sich bei den Fasern des Vlies jedoch um Kunststofffasern, insbesondere Polypropylen und/oder Polyesterfasern.

Vorzugsweise sind beide Vlieslagen in Bezug auf Material, Dicke und/oder Durchmesser unterschiedlich. Die beiden Lagen sind vorzugsweise durch die dazwischenliegende Meltblown-Schicht miteinander verbunden. Der Verbund kann durch Kalandrieren, beispielsweise Punkt- und/oder Strukturkalandrieren erzeugt oder verbessert werden.

Gemäß einer bevorzugten Ausführungsform der vorliegenden Erfindung ist vorgesehen, dass beide insbesondere äußeren Schichten einen aus Kunststoff-Feinfasern, beispielsweise Polyester- und/oder Polypropylen-Feinfasern, hergestellten Vliesstoff umfasst, welcher insbesondere ein Wirrfaser- und/oder faserorientierter-Vliesstoff ist. Das Vlies umfasst bevorzugt eine Massenbelegung (auch als Grammatur oder Flächengewicht bezeichnet) zwischen 5 und 250 Gramm pro Quadratmeter, besonders bevorzugt zwischen 10 und 175 Gramm pro Quadratmeter, und ganz besonders bevorzugt, von 13 - 130 Gramm pro Quadratmeter. Eine Lage des Filterelements weist bevorzugt eine Dicke zwischen 0,2 und 2,0 Millimetern, besonders bevorzugt zwischen 0,6 und 1,0 Millimetern, auf. Das Vlies ist derart ausgebildet, dass die Luftdurchlässigkeit des Vlieses bei 200 Pascal bevorzugt zwischen 950 und 1150 l/(m²s) liegt. Es hat sich in überraschender und nicht vorhersehbarer Weise gezeigt, dass mit derartigen Vliesstoffen optimale Ergebnisse hinsichtlich Extraktionseffizienz, Durchmisch- und Abfließverhalten, sowie Verstopfungsresistenz zu erzielen sind und sich trotzdem falls gewünscht die "Crema" bildet. Trotzdem wird das Getränkesubstrat gut zurückgehalten auch wenn der Aufstechdorn das Filterelement an- und/oder durchsticht bzw. weist eine hohe mechanische Stabilität auf.

Vorzugsweise ist die erste dem Getränkesubstrat zugewandte Schicht eine Vliesschicht mit einer Massenbelegung zwischen 5 und 50 vorzugsweise 10 - 20 und besonders bevorzugt 13 - 17 g/m². Der bevorzugte Kunststoff für diese Schicht ist Polypropylen.

Vorzugsweise ist die dritte dem Getränkesubstrat abgewandte Schicht eine Vliesschicht mit einer Massenbelegung zwischen 55 und 175 vorzugsweise 80 - 150 und besonders bevorzugt 120 - 130 g/m². Der bevorzugte Kunststoff für diese Schicht ist Polyester.

Vorzugsweise ist die mittlere Schicht eine Vliesschicht mit einer Massenbelegung zwischen 5 und 50 vorzugsweise 10-20 und besonders bevorzugt 13 - 17 g/m². Der bevorzugte Kunststoff für diese Schicht ist Polypropylen.

Vorzugsweise ist die erste und/oder die dritte und/oder das gesamte Filterelement kalandriert Dabei kann es sich um Punkt-, Flächen- und oder Strukturkalandrierung handeln.

Vorzugsweise beträgt die Luftdurchlässigkeit des gesamten Filterelements 950 - 1150 l/m²s bei einer Druckdifferenz von 200 Pa.

### Vorzugsweise beträgt die Dicke des Filterelementes 0,6 - 1,0 mm.

Gemäß einer weiteren Ausführungsform der vorliegenden Erfindung weist das Filterelement mindestens eine Schicht mit einer Filzstruktur auf. Insbesondere handelt es sich dabei um eine Nadelfilzstruktur. Vorzugsweise besteht die Filzschicht aus mindestens einer Filzstruktur und einer Trägerstruktur, insbesondere einer Gewebestruktur, wobei, besonders bevorzugt die Filzstruktur, zumindest einen Teilabschnitt des Volumens, die Trägerstruktur umfasst. Vorzugsweise erstreckt sich die Filzstruktur über der gesamten Querschnitt der Trägerstruktur. Vorzugsweise ist die Filzstruktur form- kraft und/oder stoffschlüssig mit der Trägerstruktur verbunden.

Vorzugsweise wird die Oberfläche der Filzstruktur oder des Vlies behandelt, beispielsweise wärmebehandelt, um beispielsweise lose Fasern zu fixieren.

Vorzugsweise wird die Lage, die die Filzstruktur aufweist mit der Vlieslage oder einer weiteren Filzlage, insbesondere durch Stoffschluss, verbunden. Der Stoffschluss kann dabei durch die Meltblown-Schicht und/oder durch Kalandrieren erfolgen.

Ein eine Trägerstruktur, insbesondere eine Gewebestruktur, und eine Filzstruktur aufweisende Filzschicht wird beispielsweise dadurch hergestellt, dass eine Gewebestruktur bestehend aus Längs- und Querfäden zur Verfügung gestellt wird. Für die Konstruktion eines Filzes, insbesondere eines Nadelfilzes, werden vorzugsweise Fasereinheiten ausgewählt von 0.8 - 7 dtex. Die Verbindung der Einzelfasern miteinander zu einem Filz und/oder dessen Verankerung in der Trägerstruktur findet vorzugsweise durch den Produktionsprozess des Vernadelns statt. Dabei werden Nadeln mit umgekehrten Widerhaken in das vorgelegte Faserpaket mit hoher Geschwindigkeit eingestochen und wieder herausgezogen. Durch die Widerhaken werden die Fasern über eine Vielzahl entstehender Schlaufen miteinander und/oder mit dem Trägergewebe verschlungen.

Die Trägerstruktur aufweisend eine oder mehrere Filzstrukturen umfasst bevorzugt eine Massenbelegung (auch als Grammatur oder Flächengewicht bezeichnet) zwischen 100 und 1500 Gramm pro Quadratmeter, besonders bevorzugt zwischen 200 und 650 Gramm pro Quadratmeter, und ganz besonders bevorzugt, von im Wesentlichen 150 - 250 Gramm pro Quadratmeter insbesondere für die Herstellung von Tee aber auch für Kaffee, Espresso und dergleichen und 600 - 700 Gramm pro Quadratmeter für die Herstellung von Kaffee, Espresso oder dergleichen aber auch für Tee. Ganz besonders bevorzugt beträgt die Grammatur 1000 - 1300 Gramm pro Quadratmeter für die Herstellung von Kaffee, Espresso oder dergleichen aber auch für Tee. Die Lage mit der Filzstruktur weist bevorzugt eine Dicke zwischen 0,4 und 5,0 Millimetern, besonders bevorzugt zwischen 1,1 und 3,0 Millimetern, und ganz besonders bevorzugt, 1,2 - 1,4 Millimeter für die Herstellung von Tee und 2,6 - 3,0 für die Herstellung von Kaffee auf.

Das Filterelement wird vorzugsweise in den Kapselkörper eingelegt und wird anschließend mit diesem und/oder der Seitenwand der Kapsel, insbesondere durch Schweißen, beispielsweise mit Ultraschall, verbunden, bevor das Getränkesubstrat in den Kapselkörper eingefüllt wird.

Vorzugsweise wird das Filterelement so auf dem Boden der Kapsel angeordnet dass es möglichst großflächig anliegt. Besonders bevorzugt wird das Filterelement an den Boden gesiegelt, insbesondere durch Ultraschall. Weiterhin bevorzugt wird das Filterelement vor dessen Befestigung an der Kapsel, insbesondere dem Kapselboden, gespannt, um die Anlage an den Boden zu verbessern.

Vorzugsweise überdeckt das Filterelement den Kapselboden vollständig oder nur teilweise.

Beim Öffnen der Kapsel durch ein Perforationsmittel ist es vorteilhaft, wenn dieses das Filterelement von dem Kapselboden wegbewegt und dabei spannt oder zusätzlich spannt. Dabei kann das Perforationsmittel in mindestens eine Lage des Filterelementes eindringen und/oder mindestens eine Lage des Filterelementes durchdringen.

Der Kapselkörper ist bevorzugt kegelstumpfförmig oder zylindrisch geformt und wird beispielsweise aus Kunststoff, einem Naturstoff und/oder einem biologisch abbaubaren Werkstoff aus einer tiefgezogenen Kunststofffolie oder aus einem Naturstoff geformten oder im Kunststoffspritzverfahren hergestellt. Der Kapselkörper weist vorzugsweise auf der Einfüllseite einen Kragenrand auf, auf den eine Deckelfolie gesiegelt oder aufgeklebt ist. Alternativ ist denkbar, dass der Kapselkörper und ein Kapseldeckel mittels eines mechanischen Verfahrens miteinander verbunden sind. Der Boden der Portionskapsel ist vorzugsweise geschlossen und wird vorzugsweise erst in der Brühkammer mittels eines von außen auf den Portionskapselboden wirkenden Perforationsmittels zur Erzeugung einer Auslauföffnung perforiert. Alternativ wäre aber ebenso denkbar, dass der Boden der Portionskapsel bereits werksseitig mit einer Auslauföffnung versehen ist, welche mittels einer Dichtfolie vorzugsweise verschlossen ist. Die Dichtfolie ist dann beispielsweise mittels des Perforationsmittels perforierbar oder von Hand vom Kapselboden abziehbar. Das Filterelement ist vorzugsweise reißfest ausgebildet. Bei der Dichtfolie handelt es sich vorzugsweise um eine Kunststofffolie, die mindestens eine Barriereschicht, beispielsweise eine Metallschicht, insbesondere eine Aliminium-Schicht aufweist. Die Kunststofffolie weist vorzugsweise auf ihrer der Kapsel zugewandten Seite eine "Peel-Schicht" auf, um die Kunststofffolie vergleichsweise leicht von dem Kapselboden lösen zu können.

Die vorgefertigte Auslauföffnung ist vorzugsweise so groß vorgesehen, dass sie ein gegebenenfalls vorhandenes Perforationsmittel berührungsfrei aufnehmen kann. Besonders bevorzugt ist die Auslauföffnung so groß vorgesehen, dass an ihr, beim Ausströmen des fertiggestellten Getränkes kein nennenswerter Druckverlust entsteht, insbesondere dass es zu keiner nennenswerten Verwirbelung des fertiggestellten Getränkes kommt, der zu einem Gaseintrag in das Getränk und damit zur Schaumbildung führen könnte.

Vorzugsweise weist die Portionskapsel einen Flüssigkeitsverteiler auf, der die einströmende Flüssigkeit umlenkt und über den Querschnitt der Portionskapsel verteilt.

Gemäß einer weiteren Ausführungsform der vorliegenden Erfindung ist vorgesehen, dass der Kapselboden eine Ausbuchtung in eine der Einfüllseite entgegengesetzte Richtung aufweist. Vorteilhafterweise dient die Ausbuchtung zur Aufnahme des Perforierungsmittels, so dass beim Einstechen des Perforierungsmittels in den Kapselboden der Kapselboden im Bereich der Ausbuchtung zwar perforiert wird, das Perforierungsmittel aber anschließend im Hohlraum der Ausbuchtung verbleibt. Vorzugsweise wird dabei zumindest eine Lage des Filterelements an- und/oder durchstochen. Vorzugsweise nimmt die Ausbuchtung das Filterelement zumindest teilweise auf.

Gemäß einer weiteren Ausführungsform der vorliegenden Erfindung ist vorgesehen, dass das Filterelement sich nur in einem Zentralbereich vom Kapselboden abhebt und im Randbereich des Kapselbodens weiter auf dem Kapselboden aufliegt oder am Kapselboden befestigt ist. Vorteilhafterweise wird somit ein Verrutschen des Filterelements verhindert und die Dichtwirkung zwischen Kapselkörper und Filterelement vergrößert, wobei aber gleichzeitig ein Anheben des Filterelements in seinem Zentralbereich weiterhin ermöglicht wird. Das Filterelement ist dabei vorzugsweise elastisch ausgebildet.

Gemäß einer weiteren Ausführungsform weist der Kapselboden permanent eine Ausgangsöffnung auf, welche vorzugsweise mit einer Folie abgedichtet ist, wobei die Folie besonders bevorzugt eine Abziehlasche zum Abziehen der Folie von Hand aufweist. Eine Perforation des Kapselbodens mittels eines äußeren Perforationsmittel ist hierbei vorteilhafterweise nicht erforderlich. Vor dem Einlegen der Portionskapsel in die Brühkammer wird die Folie mittels der Abziehlasche einfach vom Kapselboden abgezogen und der Brühvorgang kann gestartet werden. Die Kombination einer vorgefertigten und somit vergleichsweise großen Ausgangsöffnung mit einem Filterelement aus einer oder mehreren Vlieslagen und/oder einer Lage mit einer Filzstruktur, insbesondere Nadelfilz hat den Vorteil, dass die Getränkeflüssigkeit nicht unter hohem Druck aus der Ausgangsöffnung herausfließt und somit die Schaumbildung ("Crema"), insbesondere bei der Herstellung von amerikanischem Kaffee oder Tee, verhindert wird.

Ein weiter Gegenstand der vorliegenden Erfindung ist ein Verfahren zur Herstellung eines Getränkes, wobei im ersten Schritt eine erfindungsgemäße Portionskapsel bereitgestellt wird, wobei in einem zweiten Schritt die Portionskapsel in eine Brühkammer eingelegt wird und wobei in einem dritten Schritt zur Herstellung des Getränks eine Zubereitungsflüssigkeit mit einem Druck von bis zu 20 bar in die Portionskapsel eingeleitet wird.

Die zu einem Gegenstand der vorliegenden Erfindung gemachten Ausführungen gelten für die anderen Gegenstände gleichermaßen und umgekehrt.

Ein weiterer Gegenstand der vorliegenden Erfindung ist die Verwendung einer Portionskapsel zur Herstellung eines Getränks, vorzugsweise zur Herstellung eines Kaffee-, Kakao-, Tee- und/oder Milchgetränks.

Die zu einem Gegenstand der vorliegenden Erfindung gemachten Ausführungen gelten für die anderen Gegenstände gleichermaßen und umgekehrt.

Ausführungsbeispiele der Erfindung sind in den Figuren dargestellt und in der nachfolgenden Beschreibung näher erläutert. Die Figuren sind lediglich beispielhaft beschrieben und schränken den allgemeinen Erfindungsgedanken nicht ein.
- **Figur 1**: zeigt einen Längsschnitt durch eine Portionskapsel gemäß einer beispielhaften Ausführungsform der vorliegenden Erfindung, die für die Zubereitung von Kaffee eingerichtet ist.
- **Figur 2**: zeigt einen Längsschnitt durch eine in einer geschlossenen Brühkammer liegende Portionskapsel gemäß der beispielhaften Ausführungsform der vorliegenden Erfindung.
- **Figur 3**: zeigt eine Ausführungsform des Filterelementes der Portionskapsel gemäß der beispielhaften Ausführungsform der vorliegenden Erfindung.

In den verschiedenen Figuren sind gleiche Teile stets mit den gleichen Bezugszeichen versehen und werden daher in der Regel auch jeweils nur einmal benannt bzw. erwähnt.

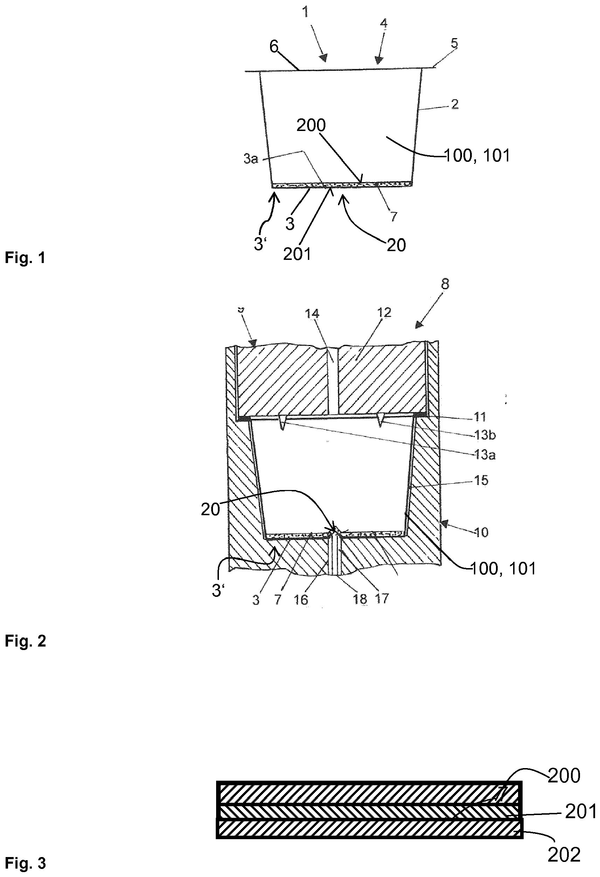

In **Figur 1** ist eine beispielshaften Ausführungsform der erfindungsgemäßen Portionskapsel 1 dargestellt. Die Portionskapsel 1 umfasst einen kegelstumpfförmigen Kapselkörper 2 mit einem Kapselboden 3 und mit einem an seiner Einfüllseite 4 angeordneten Kragenrand 5, auf den eine Deckelfolie 6 aufgeschweißt oder geklebt ist. Der Kapselboden 5 ist im Ausgangszustand entweder geschlossen oder weist in seinem Ausgangszustand schon eine Austrittsöffnung 20 auf, welche im beispielsweise mittels einer vor dem Extraktionsvorgang abziehbaren oder in der Brühkammer perforierbaren Dichtfolie (nicht dargestellt) abgedichtet ist. Zwischen dem Kapselboden 3 und der Deckelfolie 6 ist somit ein, im Ausgangszustand der Portionskapsel 1 vorzugsweise luft- und aromadicht verschlossener Hohlraum 100, ausgebildet, welcher mit einer pulver-, blatt- und/oder granulatförmigen Getränkesubstanz 101 gefüllt ist. Die Getränkesubstanz 101 umfasst dabei beispielsweise ein Kaffee- und/oder Tee. Auf der Innenseite 3a des Kapselbodens 3, d.h. innerhalb des Hohlraums 100, ist ein Filterelement 7angeordnet. Das Filterelement liegt entweder lose auf der Innenseite 3a des Kapselbodens 3 auf oder ist fest, d.h. vorzugsweise stoffschlüssig, mit der Innenseite 3a des Kapselkörperbodens 3 verbunden. In der zweiten Variante ist das Filterelement 7 insbesondere nur in einem Randbereich 3' des Kapselbodens 3 am Kapselboden 3 stoffschlüssig befestigt. Das Filterelement ist detailliert anhand von Figur 3 erläutert. Das Filterelement 7 wird vorzugsweise mittels Stanzen, Laserschnitt, Wasserstrahlschnitt, Ultraschallschnitt und/oder dergleichen aus einer Gewebebahn herausgetrennt.

In **Figur 2** ist eine Portionskapsel 1 gemäß der in Figur 1 illustrierten beispielshaften Ausführungsform der vorliegenden Erfindung dargestellt, wobei die Portionskapsel 1 in der Figur 2 in einer geschlossenen Brühkammer 8 angeordnet ist. Die Brühkammer 8 besteht aus einem ersten Brühkammerelement 9 und einem zweiten Brühkammerelement 10, wobei das erste Brühkammerelement 9 zur Einführung der Portionskapsel 1 beweglich gegenüber dem zweiten Brühkammerelement 10 oder umgekehrt vorgesehen ist. Zwischen den beiden Brühkammerelementen 9, 10 ist eine Dichtung 11 angeordnet. Das erste Brühkammerelement 9 besteht im Wesentlichen aus einem Schließkolben 12 mit Einstechelementen 13a, 13b zur Öffnung der Deckelfolie 6 der Portionskapsel 1, einer Zubereitungsflüssigkeitszuführung 14 und der Dichtung 11. Das zweite Brühkammerelement 10 besteht im Wesentlichen aus einer die Portionskapsel 1 teilweise umschließenden Brühkammerglocke 15 mit einem am Boden der Brühkammerglocke 15 angeordneten Ablaufdorn 16, der mit Ablaufrillen 17 versehen ist, und einem Getränkeablauf 18. Zur Aufnahme der Portionskapsel 1 befindet sich die Brühkammer 8 in einem nicht dargestellten geöffneten Zustand, in welchem das erste und das zweite Brühkammerelement 9, 10 voneinander beabstandet sind, um eine Zuführung der Portionskapsel 1 zu gewährleisten, und dem dargestellten geschlossenen Zustand, in welchem ein Zubereitungsvorgang zur Herstellung eines Getränks mittels der Portionskapsel 1 durchführbar ist. Im geschlossenen Zustand ist die Brühkammer 8 druckdicht verschlossen. Beim Überführen der Brühkammer 8 vom geöffneten Zustand in den abgebildeten geschlossenen Zustand wird die Deckelfolie 6 von den Einstechelementen 13a, 13b durchstochen, so dass Zubereitungsflüssigkeit, insbesondere heißes Brühwasser, durch die Zubereitungsflüssigkeitszuführung 14 unter Druck in den Hohlraum 100 der Portionskapsel 1 gelangt. Wenn die Portionskapsel 1 einen geschlossenen Kapselboden 3 aufweist, wird der Kapselboden 3 beim Schließen der Brühkammer 8 von einem als Ablaufdorn 16 ausgebildeten Perforationsmittel vorzugsweise perforiert, so dass eine Austrittsöffnung 20 im Kapselboden 3 erzeugt wird, durch welche die hergestellte Getränkeflüssigkeit aus der Portionskapsel 1 in Richtung des Getränkeablaufs 18 heraustreten kann. Zur Unterstützung der Ableitung der Getränkeflüssigkeit weist der Ablaufdorn 16 auf seiner Mantelfläche die Ablaufrillen 17 auf. In einer nicht dargestellten alternativen Ausführungsform weist der Kapselboden 3 eine Austrittsöffnung 20 auf, welche im Ausgangszustand mit einer Dichtfolie abgedichtet ist, um den Hohlraum 100 hermetisch dicht zu versiegeln. Vor dem Einlegen der Portionskapsel 1 in Brühkammer 8 wird die Dichtfolie von einem Benutzer von Hand abgezogen, so dass der Ablaufdorn 16 ungehindert durch die Austrittsöffnung 8 in die Portionskapsel 1 ragen kann. Alternativ ist aber auch denkbar, dass die Dichtfolie nicht manuell vom Benutzer entfernt wird, sondern von dem Ablaufdorn 16 beim Schließen der Brühkammer 8 perforiert wird. Die in den Hohlraum 100 unter einem Druck von bis zu 20 bar eintretende Zubereitungsflüssigkeit wechselwirkt innerhalb des Hohlraums 100 mit der Getränkesubstanz 101, wodurch sich das Getränk bildet. Das Getränk fließt anschließend durch das Filterelement 7 und durch die Austrittsöffnung 20 aus der Portionskapsel 1 aus. Vorteilhafterweise wird dabei die Bildung von Crema aufgrund des neuartigen Filterelements 7 wirksam vermieden, obwohl die Brühkammer 8 mit einem Druck von bis zu 20 bar betrieben wird. Beim Anstechen kann das Filterelement an- und/oder durchstochen werden. Außerdem kann es von dem Anstechdorn von dem Boden der Portionskapsel angehoben, insbesondere in der Mitte angehoben werden, wobei der Rand des Filterelements am Boden der Portionskapsel verbleibt.

Figur 3 zeigt eine Ausführungsform des Filterelementes gemäß der vorliegenden Erfindung. Es ist deutlich zu erkennen, dass es drei Lagen 201 - 202 aufweist. Die Lage 200 ist der Getränkesubstanz zugewandt, während die Lage 202 in Richtung des Kapselbodens gerichtet ist. Die beiden äußeren Lagen 200 und 202 bestehen aus einem Spinnvliesstoff, und sind vorzugsweise vorgefertigt. Vorzugsweise sind die beiden Lagen 200 und 202 unterschiedlich vorgesehen. In dem vorliegenden Fall besteht die erste Lage 200 aus Polypropylen und weist eine Massenbelegung von z.B. 15 g/m² auf. Die dritte Lage 202 besteht in dem vorliegenden Fall aus Polyester und weist eine Massenbelegung von z.B. 125 g/m² auf. Die Lagen können kalandriert sein, wobei Punkt- und/oder Strukturkalandrierung in Frage kommt.

Zwischen den beiden äußeren Lagen 200 und 202 befindet sich eine Vlieslage, die durch ein durch Heißluftspinnen (Meltblown-Verfahren) hergestellt ist. Heißluftspinnen (Meltblown) ist ein Prozess, bei dem nichtgewebte Stoffe direkt aus Granulat hergestellt werden. Ein spezielles Spinnverfahren in Kombination mit Hochgeschwindigkeits-Heißluft wird genutzt, um feinfaserige Stoffe mit unterschiedlichen Strukturen zu produzieren. In dem vorliegenden Fall wird in einem Extruder aufgeschmolzenes Polypropylen-Granulat von einer Pumpe in einen Düsenblock gefördert. Nach dem Austritt durch die Düsenspitze werden die entstehenden Polymerfäden durch Prozess-Heißluft verstreckt. Das entstehende Mikrofaservlies, wird direkt auf eine äußeren Schichten 200, 202 abgelegt, um das dreilagige Filterelement herzustellen. Dafür ist dann die Meltblown-Anlage um eine Abrollstation für mindestens eine äußere Schicht vor und eine Abrollstation hinter der Düse erweitert. Vorzugsweise verbindet die noch weiche, klebrige mittlere Schicht die beiden äußeren Schichten bei deren Abkühlung. Ein Kalander verbindet die äußeren Schichten und die Meltblown-Schicht zusätzlich miteinander und stabilisiert diese. mechanisch. Es kann sich um einen Punkt und/oder Strukturkalander handeln. In dem vorliegenden Fall besteht die erste Lage 201 aus Polypropylen und weist eine Massenbelegung von z.B. 15 g/m² auf

### Bezugszeichenliste

- 1: Portionskapsel
- 2: Kapselkörper
- 3: Kapselboden
- 3a: Innenseite
- 3': Randbereich
- 4: Einfüllseite
- 5: Kragenrand
- 6: Deckelfolie
- 7: Filterelement
- 8: Brühkammer
- 9: Erstes Brühkammerelement
- 10: Zweites Brühkammerelement
- 11: Dichtung
- 12: Schließkolben
- 13a: Einstechelemente
- 13b: Einstechelemente
- 14: Zubereitungsflüssigkeitszuführung
- 15: Brühkammerglocke
- 16: Ablaufdorn
- 17: Ablaufrillen
- 18: Getränkeablauf
- 20: Austrittsöffnung
- 100: Hohlraum
- 101: Getränkesubstanz
- 200: Erste Schicht, erste Vliesschicht
- 201: Zweite mit Heißluftspinnen hergestellte Faserschicht
- 202: dritte Schicht, dritte Vliesschicht

## Patentansprüche

1. Portionskapsel (1) zur Herstellung eines Getränks aufweisend einen Kapselkörper (2) mit einem Kapselboden (3) und einer Einfüllseite (4), wobei zwischen dem Kapselboden (3) und der Einfüllseite (4) ein Hohlraum (100) zur Aufnahme eines pulverförmigen oder flüssigen Getränkesubstrats (101) ausgebildet ist und wobei zwischen dem Getränkesubstrat (101) und dem Kapselboden (3) ein Filterelement (7) angeordnet ist, wobei das Filterelement (7) mindestens dreischichtig vorgesehen ist, **dadurch gekennzeichnet, dass** zwischen zwei Schichten (200, 202) eine mit Heißluftspinnen hergestellte Faserschicht (201) vorgesehen ist.

2. Portionskapsel (1) nach Anspruch 1, **dadurch gekennzeichnet, dass** die erste Schicht und/oder die dritte Schicht (200, 202) eine Vliesschicht ist.

3. Portionskapsel (1) nach Anspruch 2, **dadurch gekennzeichnet, dass** die erste und die dritte Vliesschicht (200, 202) unterschiedlich sind.

4. Portionskapsel (1) nach einem der voranstehenden Ansprüche, **dadurch gekennzeichnet, dass** die erste dem Getränkesubstrat zugewandte Schicht (200) eine Vliesschicht mit einer Massenbelegung zwischen 5 und 50 vorzugsweise 10-20 und besonders bevorzugt 13 - 17 g/m² ist

5. Portionskapsel (1) nach einem der voranstehenden Ansprüche, **dadurch gekennzeichnet, dass** die dritte dem Getränkesubstrat abgewandte Schicht (202) eine Vliesschicht mit einer Massenbelegung zwischen 55 und 175 vorzugsweise 80 - 150 und besonders bevorzugt 120 - 130 g/m² ist.

6. Portionskapsel (1) nach einem der voranstehenden Ansprüche, **dadurch gekennzeichnet, dass** die mittlere Schicht (201) eine Vliesschicht mit einer Massenbelegung zwischen 5 und 50 vorzugsweise 10-20 und besonders bevorzugt 13-17 g/m² ist.

7. Portionskapsel (1) nach einem der voranstehenden Ansprüche, **dadurch gekennzeichnet, dass** das die erste und die dritte Schicht aus Polyesterfasern und die zweite Schicht aus Polypropylen gefertigt ist.

8. Portionskapsel (1) nach einem der voranstehenden Ansprüche, **dadurch gekennzeichnet, dass** die erste und/oder die dritte und/oder das gesamte Filterelement kalandriert ist.

9. Portionskapsel (1) nach einem der voranstehenden Ansprüche, **dadurch gekennzeichnet, dass** die Luftdurchlässigkeit des Filterelements 950 - 1150 l/m²s bei einer Druckdifferenz von 200 Pa beträgt.

10. Portionskapsel (1) nach einem der voranstehenden Ansprüche, **dadurch gekennzeichnet, dass** die Dicke des Filterelementes 0,6 - 1,0 mm beträgt.

11. Verfahren zur Herstellung eines Getränkes, wobei im ersten Schritt eine Portionskapsel (1) nach einem der vorhergehenden Ansprüche bereitgestellt wird, wobei in einem zweiten Schritt die Portionskapsel (1) in eine Brühkammer (8) eingelegt wird und wobei in einem dritten Schritt zur Herstellung des Getränks eine Zubereitungsflüssigkeit mit einem Druck von bis zu 20 bar in die Portionskapsel (1) eingeleitet wird.

12. Verwendung einer Portionskapsel (1) nach einem der Ansprüche 1 bis 10 zur Herstellung eines Getränks, vorzugsweise zur Herstellung eines Kaffee- und/oder Teegetränks.

## Claims

1. A portion capsule (1) for the production of a beverage, having a capsule body (2) having a capsule base (3) and a filling side (4), wherein a cavity (100) for receiving a pulverulent or liquid beverage substrate (101) is configured between the capsule base (3) and the filling side (4), and wherein a filter element (7) is disposed between the beverage substrate (101) and the capsule base (3), wherein the filter element (7) is provided so as to be in at least three layers, **characterized in that** a fibrous layer (201) that is produced by hot air spinning is provided between two layers (200, 202).

2. The portion capsule (1) as claimed in claim 1, **characterized in that** the first layer and/or the third layer (200, 202) are/is a nonwoven layer.

3. The portion capsule (1) as claimed in claim 2, **characterized in that** the first and the third nonwoven layer (200, 202) are dissimilar.

4. The portion capsule (1) as claimed in one of the preceding claims, **characterized in that** the first layer (200) that faces the beverage substrate is a nonwoven layer having a grammage between 5 and 50, preferably 10 and 20, and particularly preferably 13 and 17 g/m².

5. The portion capsule (1) as claimed in one of the preceding claims, **characterized in that** the third layer (202) that faces away from the beverage substrate is a nonwoven layer having a grammage between 55 and 175, preferably 80 and 150, and particularly preferably 120 and 130 g/m².

6. The portion capsule (1) as claimed in one of the preceding claims, **characterized in that** the central layer (201) is a nonwoven layer having a grammage between 5 and 50, preferably 10 and 20, and particularly preferably 13 and 17 g/m².

7. The portion capsule (1) as claimed in one of the preceding claims, **characterized in that** the first and the third layer are made from polyester fibers, and the second layer is made from polypropylene.

8. The portion capsule (1) as claimed in one of the preceding claims, **characterized in that** the first and/or the third and/or the entire filter element are/is calendared.

9. The portion capsule (1) as claimed in one of the preceding claims, **characterized in that** the air permeability of the filter element at a pressure differential of 200 Pa is 950 to 1150 l/m²s.

10. The portion capsule (1) as claimed in one of the preceding claims, **characterized in that** the thickness of the filter element is 0.6 to 1.0 mm.

11. A method for the production of a beverage, wherein in the first step a portion capsule (1) as claimed in one of the preceding claims is provided, wherein in a second step the portion capsule (1) is placed into a brewing chamber (8), and wherein in a third step for the production of the beverage, a preparation liquid is directed into the portion capsule (1) at a pressure of up to 20 bar.

12. The use of a portion capsule (1) as claimed in one of claims 1 to 10 for the production of a beverage, preferably for the production of a coffee and/or tea beverage.

## Revendications

1. Capsule (1) pour la préparation d'une boisson présentant un corps de capsule (2) avec un fond de capsule (3) et un côté de remplissage (4), dans laquelle une cavité (100) est formée entre le fond de capsule (3) et le côté de remplissage (4) en vue de contenir un substrat de boisson pulvérulent ou liquide (101) et dans laquelle un élément de filtre (7) est disposé entre le substrat de boisson (101) et le fond de capsule (3), dans laquelle l'élément de filtre (7) est prévu avec au moins trois couches, **caractérisée en ce qu'**il est prévu entre deux couches (200, 202) une couche de fibres (201) fabriquée par filage à l'air chaud.

2. Capsule (1) selon la revendication 1, **caractérisée en ce que** la première couche et/ou la troisième couche (200, 202) est une couche de non-tissé.

3. Capsule (1) selon la revendication 2, **caractérisée en ce que** la première et la troisième couches (200, 202) sont différentes.

4. Capsule (1) selon l'une quelconque des revendications précédentes, **caractérisée en ce que** la première couche (200) tournée vers le substrat de boisson est une couche de non-tissé avec un dépôt massique compris entre 5 et 50, de préférence entre 10 et 20, et de préférence encore entre 13 et 17 g/m².

5. Capsule (1) selon l'une quelconque des revendications précédentes, **caractérisée en ce que** la troisième couche (202) détournée du substrat de boisson est une couche de non-tissé avec un dépôt massique compris entre 55 et 175, de préférence entre 80 et 150, et de préférence encore entre 120 et 130 g/m².

6. Capsule (1) selon l'une quelconque des revendications précédentes, **caractérisée en ce que** la couche moyenne (201) est une couche de non-tissé avec un dépôt massique compris entre 5 et 50, de préférence entre 10 et 20, et de préférence encore entre 13 et 17 g/m².

7. Capsule (1) selon l'une quelconque des revendications précédentes, **caractérisée en ce que** la première et la troisième couches sont fabriquées en fibres de polyester et la deuxième couche est fabriquée en polypropylène.

8. Capsule (1) selon l'une quelconque des revendications précédentes, **caractérisée en ce que** la première couche et/ou la troisième couche et/ou tout l'élément de filtre est calandré(e).

9. Capsule (1) selon l'une quelconque des revendications précédentes, **caractérisée en ce que** la perméabilité à l'air de l'élément de filtre vaut 950 à 1150 l/m²s pour une différence de pression de 200 Pa.

10. Capsule (1) selon l'une quelconque des revendications précédentes, **caractérisée en ce que** l'épaisseur de l'élément de filtre vaut 0,6 à 1,0 mm.

11. Procédé de préparation d'une boisson, dans lequel dans la première étape on fournit une capsule (1) selon l'une quelconque des revendications précédentes, dans lequel dans une deuxième étape on place la capsule (1) dans une chambre de percolation (8) et dans lequel dans une troisième étape on introduit dans la capsule (1) un liquide de préparation avec une pression allant jusque 20 bars pour la préparation de la boisson.

12. Utilisation d'une capsule (1) selon l'une quelconque des revendications 1 à 10, pour la préparation d'une boisson, en particulier pour la préparation d'une boisson à base de café et/ou de thé.
